# EUROPEAN PATENT APPLICATION

(11) **EP 4 221 144 A1**
(43) Date of publication of application: **02.08.2023**
(21) Application number: 22153414.2
(22) Date of filing: 26.01.2022
(51) Int. Cl.: H04L 47/25, H04L 47/27

(54) **DETERMINING OPTIMIZED DATA RATES FOR A COMMUNICATION PATH**

(71) Applicant: Deutsche Telekom AG, 53113 Bonn (DE)
(72) Inventor: AMEND, Markus, 63667 Nidda (DE)
(74) Representative: Braun-Dullaeus Pannen Emmerling Patent- & Rechtsanwaltspartnerschaft mbB

(57) **Abstract**

Techniques to set a data rate for the transmission of data packets over a communication path of a communications system, wherein the method comprises the following steps:
• Providing at least a first communication path P₁ between a sender and a receiver;
• Providing data packet transport characteristics C₁ of the at least first communication path P₁;
• Providing a data assignment unit, wherein a data assignment algorithm is implemented on the data assignment unit that calculates a data rate R₁ that shall be send by the sender to the receiver via the at least a first communication path P₁ based on the data packets transport characteristics C₁ of the at least first communication path P₁.

## Description

The invention relates to techniques to set a data rate for the transmission of data packets over a communication path of a communications system.

Single path network protocols, like TCP, and Multipath network protocols are used to transfer data packets between a sender and a receiver. It is a general goal that units and devices involved in the data transfer try to transfer as much data within a time period as possible under the boundary condition not to overload the data network if possible. Overload of a network yields in packet loss and congestion situations.

In particular, Multipath network protocols such as MPTCP [1], MP-DCCP [3], MP-QUIC [2] or CMT-SCTP [4] allow to establish more than one communication flow between a sender and a receiver, wherein each communication data flow tries to optimize its data transfer.

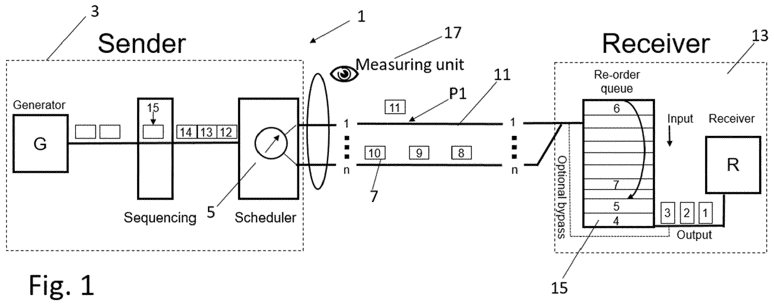

A sending unit, in the following simply named as a "sender", has the functionality to set the amount of data that shall be transferred within a certain time. In other words, the sender can determine the throughput. In multipath systems, the sender does not only determine the global bandwidth but also how to schedule this bandwidth across the individual available communication flows 1-n as shown in Fig. 1. Fig. 1 also covers a single path communication case, wherein the single path case uses only one communication flow.

Setting an appropriate bandwidth and/or efficient scheduling of this bandwidth across the individual available communication flows 1-n typically relies on path measurements, which characterize the transport capabilities of the communication flows like available bandwidth or Round-Trip-Time. Using common single path transport protocols or multipath transport protocols like [1-4], one can gain these values from the employed feedback loop and congestion control approaches like New Reno, Cubic, BBR etc.

While the sender distributes data traffic in multipath systems across different communication flows, the receiving unit, in the following shortly named "receiver", usually has to re-assemble the data traffic that has been split before sending and has to reconstruct the order of sequence. In the single path communication case, the task of re-assembling the data traffic is usually less problematic because all the data packets use the same path. Out-of-order delivery occurs at the receiver due to communication flows with different transport characteristics like latency, error rate and bandwidth. In order to reconstruct the order of sequence a re-order queue is used to compensate for those varying transport characteristics. A possible entity therefore is described in [5].

To avoid overload situations in single path and multipath communication networks, congestion control mechanisms are used. Congestion control mechanisms estimate how many data packets can be transmitted over a communication path without overstraining the path's capabilities. A common parameter to specify the amount of data packets and in that sense also the bandwidth is the so-called congestion window "CWND". The larger the CWND is being set for a distinct path, the more data packets are transferred per time unit.

The CWND specifies how many data packets are sent. The larger the CWND, the more data packets are sent until the CWND gets exhausted. In particular, twice the number of data packets follow from a CWND that is twice as large.

However, the task to be solved is typically to find the right size for the CWND, which fits to the path capabilities. If the CWND is set too low, then less data packets are transferred so that the capabilities of the network are not really fully exploited. On the other hand, if the CWND is set too high, this leads to overload situations of the network with buffer bloat or data loss.

Congestion control algorithms for determining the CWND exist as Reno, New Reno, Cubic, Illinois, wVegas, BBR, ... with different optimizations goals. However, there is some similarity, they all determine a CWND which is usually used in the applied transport protocol such as TCP, SCTP, QUIC or DCCP, respectively in their multipath pendant. Whenever the CWND is exhausted, transmissions stops on the belonging path. A traditional way in congestion control schemes is to let the CWND grow until data packets get lost or increasing latency is experienced, if such situations occur the CWND is set back to a lower CWND size.

Hence, the congestion window "CWND" is a rule parameter of congestion control "CC", and is used to iteratively optimize the bandwidth to be used.

As a drawback in the state of the art, the congestion control, i.e. finding the right size for the CWND, is being performed in a passive fashion, because only the result of a transmission is looked at to change the control parameter CWND iteratively. The disadvantage of this passive regulation is that the procedure always only reacts when trying to find the best CWND. The CWND is increased until pact loss occurs as a consequence of an overload situation. As a consequence, the CWND is strongly reduced so that the overload is reduced, too.

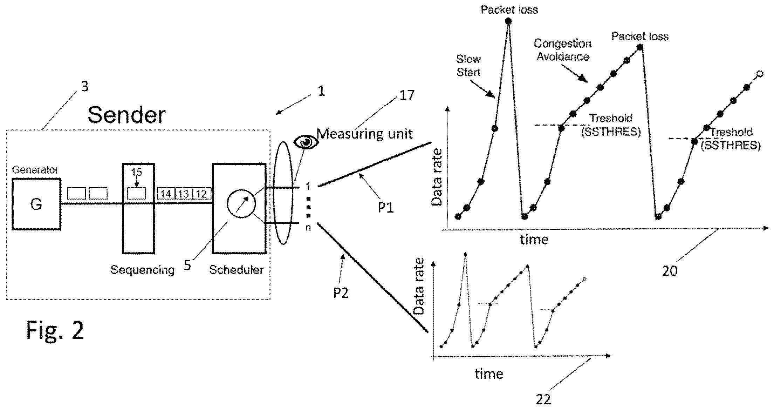

As a result, a kind of sawtooth characteristic is obtained for the resulting bandwidth used as shown in Fig. 2. Such a try and error principle causes unnecessary load and efficiency loss in communication networks.

In the view of above, it is an object of the present invention to overcome the disadvantages of the state-of-the-art and to provide techniques to increase the efficiency of data transfer in communication networks, in particular in multipath communication networks.

This object is solved by the features of the independent claims.

The features of the various aspects of the invention described below or the various examples of implementation may be combined with each other, unless this is explicitly excluded or is technically impossible.

According to a first aspect of the invention, a method is provided to set a data rate for the transmission of data packets over a communication path of a communication system; in an embodiment, the data rate can be the bandwidth of the communication path. The method comprises the following steps:
- Providing at least a first communication path P₁ between a sender and a receiver;
   ∘ the communication path can be a communication path like a cellular communication path (like 3G, LTE, 5G or even future communication standards), Wi-Fi communication path, fixed line communication path (like DSL), the Internet and the like. The communication path P₁ can in particular be used to transfer data packets, which are exchanged between respective applications running on the sender and/or the receiver. The sender and/or the receiver can be typical user equipment like server, smart phones, tablets, computers, etc.
- Providing data packet transport characteristics C₁ of the at least first communication path P₁;
   ∘ the data packet transport characteristics C₁ can be provided in a preferred embodiment to the sender. However, it is also possible that the data packet transport characteristics C₁ are provided to a central computer entity within the communication network that provides the communication path P₁. In principle it is possible that the sender and/or the central computer entity can use the data packet transport characteristics C₁ as will be described in the following to set the data rate. In the latter case, the central computer entity needs to inform the sender about the calculated value of the data rate so that the sender can adjust its data rate accordingly.
   ∘ The data packet transport characteristics C₁ can comprise information about i) the type of the communication path; for example, if the communication path P₁ is a cellular communication path (like 3G, LTE, 5G or even future communication standards), Wi-Fi communication path, fixed line communication path (like DSL), ii) RTT values, iii) latency information, iv) path stability information, v) packet loss information, vi) bandwidth information and/or vii) further technical information that can characterize the communication path; the bandwidth information can comprise information about an available or a remaining bandwidth;
- Providing a data assignment unit, wherein a data assignment algorithm is implemented on the data assignment unit that calculates a data rate R₁ that shall be send by the sender to the receiver via the at least a first communication path P₁ based on the data packets transport characteristics C₁ of the at least first communication path P₁.
   ∘ the sender sends the data rate R₁ over its appropriate communication interface I₁ that is related to the first communication path P₁.
   ∘ the data assignment unit and the implemented data assignment algorithm can be implemented on the sender or as discussed previously in a central computing entity. In the latter case, the calculated data rate R₁ needs to be sent from the central computing entity to the sender via a communication path, in particular the first communication path P₁ in order to make the calculated data rate R₁ available to the sender.
   ∘ the calculation of the data rate R₁ can be based on a formula or can be determined by using a lookup table. In the case of a lookup table, it is possible to relate specific data packets transport characteristics C₁ to certain data rates. The formula can look like R₁ = f(C₁). In a very simple example, if it is known that the first communication path P₁ provides a stable bandwidth of C₁ = 100 Mbps, the formula can be R₁ = f(Ci) = 100 Mbps; R₁ could also be affected by cross traffic or the access interface uses a lower modulation than the path allows. In this case, the cross traffic would have to be subtracted from the 100Mbps, or R₁ = min(MCS,f(C1)) would have to be applied in the case of a lower modulation (MCS) of the Wifi interface.

The inventive calculation of the data rate R₁ provides the advantage over the commonly used iterated method, that one is able to avoid the sawtooth-like looking data rates characteristic that comes along with increasing the size of the congestion window CWND up to the point when congestion occurs which is followed by a decrease of size of the congestion window CWND.

The invention provides the advantage that the optimal data rate R₁ can initially be determined by the calculation so that right at the start, the data rate R₁ can be exploited most efficiently in the communication. This is in particular the case for a communication path with known and stable path characteristics C₁. As a consequence, sawtooth-like data rate transmission can be avoided.

In an embodiment, multiple communication paths Pᵢ, in particular at least two communication paths P₁ and P₂, are provided in a multipath scenario between the sender and the receiver, and the data assignment unit calculates a data rate Rᵢ for each communication path Pᵢ if it is provided with the corresponding data packet transport characteristics Cᵢ. Preferably, if the corresponding data packet transport characteristics Cᵢ are not provided for a communication path Pᵢ, it is possible to use the standard congestion control method that uses the CWND. Hence, it is possible that the first communication path P₁ uses the inventive calculated data rate R₁, whereas the second communication path uses the iterative method that employs the CWND.

This provides the advantage that different communication paths, particular communication paths of a different technical kind, can operate with an individual calculated data rate Rᵢ or can even be operated with a combination of the inventive calculated data rate Rᵢ and with a congestion method that is already known in the state of art. If different communication paths Pᵢ can operate with a data rate Rᵢ that is optimized with respect to the data packet transport characteristics Cᵢ, this enables that the overall data communication can be optimized. For example, the first communication path P₁ can be a fixed line DSL connection between the sender and the receiver. In this case it is very likely that the path characteristics C₁ are known and rather stable, so that the individual data rate R₁ can be calculated. The second communication path P₂ can be a cellular connection between the sender and the receiver. Typically, the path characteristics C₂ of cellular paths are not as stable as in the fixed line DSL connection. It is possible to include this uncertainty in the calculation of R₂ which typically leads to the result that R₁ > R₂. However, it is to be expected that 5G cellular communication will greatly increase the stability and possible data rate of the cellular connection. Hence, also R₁ ≤ R₂ cases are possible.

In an embodiment, the data assignment unit is configured to be a multipath scheduler in the multipath scenario.

Since in a multipath scenario the multipath scheduler decides based on various criteria how to distribute data packets between multiple communication paths, it is especially advantageous to choose the multipath scheduler as the data assignment unit, so that the decision how to distribute the data packets and to set the appropriate data rate can be done by a single unit.

In an embodiment, a conventional congestion window "CWND" is determined by a conventional iterative congestion control method and is used for the setting of the data rate Rᵢ of the communication path Pᵢ
- if a temporal stability of the communication path that is determined based on the data packets transport characteristics Cᵢ is below a predefined threshold, and/or
- if no data packet transport characteristics Cᵢ are provided.

Temporal stability can be assumed if there is a constant data rate over a predefined time duration or if there is an average data rate over a predefined time duration that is within a predefined standard deviation (e.g. 2 a).

The provides the advantage of having a back-up option if it is not possible to calculate the data rates Rᵢ due to any of the two cases described above. Using this back up option enables the method to use at least the standards congestion control mechanisms to enable a data communication. If it is determined that the temporal stability of the path is below a predefined threshold it is possible that the calculated data rate cannot be supplied constantly over time which can lead to data packet loss or overloading of the data path. In this case, it might be beneficial to use the state-of-the-art sawtooth -like congestion control. The second case, if no data packet transport characteristics Cᵢ is provided the data rate Rᵢ cannot be calculated so that the backup option at least enables data communication.

In an embodiment, the calculated data rate Rᵢ is constant over time if the data packets transport characteristics Cᵢ is constant, too.

This provides the advantage that the data rate does not exceed the calculated data rate Rᵢ which could lead to overloading the respective communication path Pᵢ. On the other hand, this provides that the data rate Rᵢ does not drop to a lower value so that the communication path Pᵢ can be used most efficiently.

In an embodiment, the data rate Rᵢ is the product of a maximal possible data rate of the communication path R_{i, max} according to the data packets transport characteristics Cᵢ multiplied by a safety factor Fᵢ, Rᵢ = R_{i, max} * Fᵢ.

This provides the advantage that Rᵢ is adjusted, i.e. lowered, to a value so that overload situations of the communication path Pᵢ are avoided. Hence, Fᵢ is to be chosen to be Fᵢ ≤ 1. The value of F can also depend on the type of the communication path. For example, if the communication path is a fixed line DSL connection Fᵢ can be chosen to be = 0.99 and if the communication path is a wireless communication path Fᵢ can be chosen to be 0.95. Optionally, the value of F can also depend on the stability of the communication path. As a rule of thumb, the more stable or communication path is, the closer to 1 F can be chosen. Therefore, considering also stability in the examples provided above, could yield the following values: Fᵢ (DSL connection) = 0, 98: because generally a DSL connection is very stable; Fᵢ (wireless connection) = 0, 90: because generally a wireless connection is less stable. Fᵢ can also be based on the standard deviation σ of the average data rate of the respective path i for a predefined period. For example Fᵢ = 1 - (1 - a), or Fᵢ = 1 - (1 - 2σ). This provides the advantage, that each path is only be judged based on its temporal stability and not based on fixed criteria like being a wireless connection or DSL connection.

In an embodiment, the data packets transport characteristics Cᵢ are provided by a network provider, determined by analyzing history data and/or by a measuring unit.

If the network provider knows the data packets transport characteristics Cᵢ it is possible that he simply provides the values to the data assignment unit so that the calculation of Rᵢ can be performed accordingly. The provision of those values can be done by a data transfer when the sender tries to communicate over a certain communication path. The network provider has means to determine the communication path the sender tries to use and can look up the appropriate data transport characteristics Cᵢ in a database and send them to the sender for the calculation. However, as described above, the calculation can also be performed on a computing unit of the network provider, so that the network provider only sends the calculated data rate Rᵢ to the sender.

The analysis of the history data of a certain communication path Pᵢ, wherein the history data comprises information about the delivered data rate in the past, can in principle be done by the sender and/or by the network provider. The history data for a certain communication path can be recorded by sender itself and/or by the network provider.

Of course, the analysis is done with respect on the communication path Pᵢ with which the sender wants to transmit its data packets. If the data rates that could be supplied in the past, in particular along with the appropriate stability values, are known, this information can be used to estimate data transport characteristics Cᵢ values for the calculation. In particular, it is possible to determine an average data transport characteristics Cᵢ value with appropriate uncertainty values. For example, if the value is calculated based on two standard deviations, one can be quite sure that the actual Cᵢ will be covered by this estimation.

It is possible to resolve the history data in days and/or even hours. This can play a role because the available bandwidth and hence the appropriate data transport characteristics Cᵢ can depend on time Cᵢ = Cᵢ (t). For example, it can be expected that during 1 a.m. to 4 a.m. the available bandwidth is higher than during 4 p.m. to 6 p.m. In other words, the calculation of the data rate Rᵢ take the time dependence Cᵢ = Cᵢ (t) from history data into account. Optionally and/or additionally the history data can also comprise information about the location and/or other information that enable the sender in particular to distinguish between communication paths of the same type. In other words, in general it makes a difference if the sender is connected via a DSL communication path associated to a first household or to a DSL communication path associated to a second household. In other words, the calculation of the data rate Rᵢ can also take local information r into account so that it can be expressed as: Cᵢ = Cᵢ (r) or Cᵢ = Cᵢ (r, t).

The data packets transport characteristics Cᵢ can also be measured by a measuring unit. In principle, this measuring unit can be located within the communication network and be associated to the respective communication path Pᵢ. If such a measuring unit is configured to measure the data transport characteristics Pᵢ it can send the measured results to the sender. In an embodiment, it is possible that the measuring unit is associated to the communication interface of the sender that provides the communication path Pᵢ with data packets.

In an embodiment, the measurement extracts the measured values Cᵢ from a congestion control protocol and/or a data flow rate acquisition unit that measures the data packets transport characteristics Cᵢ by inspecting a communication interface Iᵢ and/or by inspecting the communication path Pᵢ. This provides the advantage that typically a congestion control protocol is already being implemented in any common sender, so that it is very efficient to extract the values which are already measured and provided by the congestion control protocol. A typical congestion control protocol provides metrics like RTT (round-trip-time), packet loss, out of delivery information, etc. Hence, obtaining the data packets transport characteristics Cᵢ is very efficient by inspecting the associated communication interface Iᵢ that typically already provides means to obtain the appropriate metrics.

In an embodiment, the data rate Rᵢ is dynamically adjusted if the corresponding data packets transport characteristics Cᵢ change.

This provides the advantage that it can be avoided that Rᵢ is too high or too low if the data packets transport characteristics Cᵢ change. In principle, this adjustment can be based on time-dependent history data and/or on regular measurements of the data packets transport characteristics Cᵢ. For example, the measurements could be repeated every five seconds.

In an embodiment, the data rate Rᵢ is transformed into a CWND format and provided to a conventional data assignment unit and/or the multipath scheduler.

This provides the advantage that the calculated data rate Rᵢ looks like the CWND format that has been already implemented in almost all senders, wherein the senders technically know how to handle a CWND. Transforming the data rate Rᵢ into the CWND format hence enables to use the calculated value without having to adapt the senders that are not equipped with the inventive algorithm. This transformation fools the senders into thinking they are dealing with their known CWND format without having to adjust older senders to the new inventive method.

According to a second aspect of the invention, a data assignment unit of a sender is provided, the data assignment unit comprising means to schedule data packets to a first communication path P₁ based on data packet transport characteristics C₁ of the at least first communication path P₁; a computing unit with an assignment algorithm that is configured to calculate a data rate R₁ that shall be scheduled to the at least first communication path P₁ based on the data packets transport characteristics C₁ of the at least first communication path P₁. In particular, the data assignment unit is configured to execute the steps of the method described above.

This basically provides the same advantages as described in the context of the method, namely that the data rate is not being obtained by an iterated method but that it is calculated to perfectly match the prerequisites of the communication path P₁.

In an embodiment, the data assignment unit is a multipath scheduler that comprises means to schedule data packets between multiple communication paths Pᵢ, in particular at least two communication paths P₁ and P₂, wherein the multipath scheduler is configured to calculate a data rate Rᵢ for each communication path Pᵢ if it is provided with the corresponding data packet transport characteristics Cᵢ. In particular, the multipath scheduler is configured to execute the steps of the method described above.

This provides the advantage that in case of multiple communication paths Pᵢ the data rate Rᵢ can be individually calculated to perfectly match the prerequisites of the respective communication path Pᵢ.

According to a third aspect of the invention, a sender is provided that comprises the data assignment described above.

This provides the advantage that such an inventive sender can fully exploit the capabilities of its communication paths so that its data transfer to a receiver can be optimized.

A further aspect of the invention relates to a communication system that comprises the inventive sender, a receiver, and at least one communication path P₁, preferably multiple communication paths Pᵢ, between the sender and the receiver, wherein the communication system is being configured to execute the steps of the method described above.

According to a fourth aspect of the invention, a computer program is being provided that comprises instructions which, when the program is executed by a computer, cause the computer to carry out the steps of the inventive method.

In the following, preferred implementation examples of the present invention are explained with reference to the accompanying figure:
- Fig. 1:: shows a typical multipath communication system 1.
- Fig. 2:: shows a typical data rate distribution when using standard congestion control methods.
- Fig. 3:: shows a typical data rate distribution when using the inventive method.
- Fig. 4:: shows a mixed scenario in which one communication path uses the inventive method, whereas the other communication path uses standard congestion control methods.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 1 shows a typical multipath communication system 1 of a network provider. A sender entity 3, in short the "sender" 3, is being provided with the ability to decide how to schedule a data traffic across multiple communication paths Pᵢ 11. The communication paths Pᵢ can be cellular, Wi-Fi, and/or fixed line communication paths. Some aspects of the invention can also be carried out by a single-path communication system 1 that comprises only one communication path P₁ between the sender 3 und the receiver 13.

For that purpose, the sender 3 comprises a data assignment unit 5, in particular a multipath scheduler 5, that distributes the data packets 7 of the data traffic to each of the multiple communication paths Pᵢ 11. An efficient scheduling relies on finding optimized data rates Rᵢ for the respective communication paths Pᵢ 11 as soon as possible so to avoid the typical sawtooth like looking data rate pattern. For that purpose, the data assignment unit 5 is configured to calculate a data rate Rᵢ that shall be send by the sender to the receiver via the respective communication paths Pᵢ based on the data packets transport characteristics C₁ of the communication path P₁.

In particular, a data assignment algorithm can be implemented to execute the calculation of the data rates Rᵢ.

The data packets transport characteristics Cᵢ can be provided to the data assignment algorithm by the network provider or can be generated by the sender 3 itself, for example by performing measurements that are configured to obtain data packets transport characteristics Cᵢ. Another possibility is to extract the data packets transport characteristics Cᵢ from available congestion control protocols.

While the sender entity 3 distributes the data packets 7 across different communication paths Pᵢ 11, a receiver entity 13, in short a "receiver" 13, might take care to reassemble the split traffic and to reconstruct the original order sequence by means of a reordering unit 15. Out-of-order delivery frequently occurs at the receiver entity 13 due to the fact that different communication links 11 show different data packets transport characteristics like latency, error rate and/or bandwidth. In order to reconstruct the original order of sequence the reordering unit 15 can be used as described in EP 3531637 B1. Fig. 1 also shows a measuring unit 17 that can be used to measure the data packets transport characteristics Cᵢ of the respective path. The measuring unit 17 can be located within the communication network and/or assigned to the communication interfaces Iᵢ of the sender 3 which are related to the different communication paths Pᵢ.

Fig. 2 shows a typical data rate distribution when using standard congestion control methods.

Fig. 2 will be described with exemplary congestion control algorithm. It will show how the iterative concept of increasing and decreasing the CWND will yield in the typical sawtooth looking like distribution, wherein this sawtooth pattern has the effect that the communication path is either overloaded or not fully exploited.

In Fig. 2 the standard congestion control method is being applied to the first communication path P₁ and to the second communication path P₂. To avoid repetitions, it would only be explained in detail in the context of communication path P₁. In this case, the multipath scheduler 5 comprises the congestion control algorithm that schedules the data packets as follows:
"Slow start", is part of the congestion control strategy used by TCP to avoid sending more data than the network is capable of forwarding, that is, to avoid causing network congestion.

"Slow start" begins with an initial value of CWND, it must be 2, 3 or 4 maximum segment size (MSS). The value for the congestion window size can be increased by 1 MSS with each acknowledgement (ACK) received, effectively doubling the window size each RTT.

The transmission data rate will be increased by the "slow-start" algorithm until either a packet loss is detected, or the receiver's advertised window (RWND) is the limiting factor.

Or slow start threshold ("ssthresh") is reached, which is used to determine whether the slow start or congestion avoidance algorithm is used, which is a value set to limit "slow start".

If the CWND reaches "ssthresh", TCP changes to congestion avoidance algorithm. It should increase by up to 1 MSS for each RTT.

A common formula is that each new ACK increases the CWND by MSS * MSS / CWND. It almost linearly and provides an acceptable approximation.

If a loss event occurs, TCP assumes that it is due to network congestion and takes steps to reduce the offered load on the network. These measurements depend on the exact TCP congestion avoidance algorithm used.

When a TCP sender detects segment loss using the retransmission timer and the given segment has not yet been resent by way of the retransmission timer, the value of ssthresh must be set to no more than half of the amount of data that has been sent but not yet cumulatively acknowledged.

As can be seen in the data rate distribution plots 20 and 22, this results in the sawtooth like looking data rate distributions R₁ and R₂.

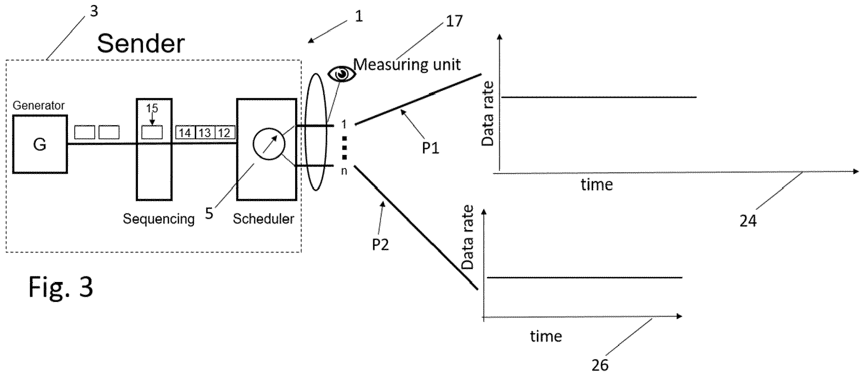

Fig. 3 shows a typical data rate distribution when using the inventive method. The data assignment algorithm implemented on the multipath scheduler 5 calculates an individual data rate R₁, R₂ for the communication paths P₁, P₂ based on the respective data packets transport characteristics C₁, C₂.

The data rate distribution plots 24, 26 show that the calculated data rates R₁, R₂ are constant over time, at least over a certain period of time in which the data packets transport characteristics are constant, so that the sawtooth like looking pattern can be avoided and the communication paths P₁, P₂ can be used more efficiently.

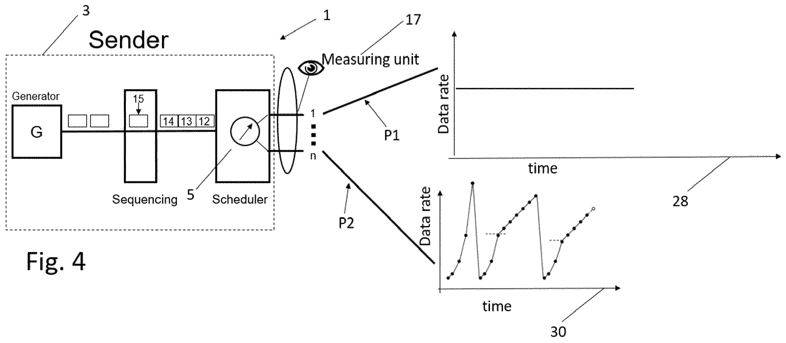

Fig. 4 shows a mixed scenario in which the data rate R₁ for the first communication path P₁ is being calculated by the inventive method, whereas the second communication path P₂ uses standards congestion control procedures for the data rate R₂. In this case, both algorithms are implemented in the multipath scheduler 5 and the multipath scheduler chooses the appropriate algorithm for each of the communication paths. In an embodiment, the multipath scheduler 5 chooses the inventive method when data transport characteristics for the communication path are available, wherein the multipath scheduler chooses a standards congestion control procedure if no data transport characteristics are available for the path. Hence, in the case shown in Fig. 4 data transport characteristics C₁ were only available for communication path P₁. As a result, the data rate distribution plot 28 that is related to the first path P₁ exhibits the optimized constant data rate R1, whereas the data rate distribution plot 30 shows the adverse sawtooth like pattern. The rational of Fig. 4 is that it is already beneficial if one of the communication paths uses the optimized data rate of the inventive method.

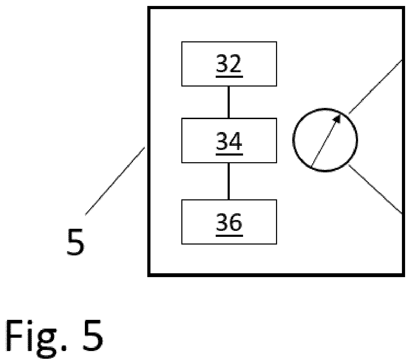

Fig. 5 shows the data assignment algorithm implemented on the multipath scheduler 5, in particular as a computer program product.
- in a first step 32: the algorithm is being provided with means to schedule data packets to at least one communication path Pᵢ between a sender and a receiver;
- in a second step 34: the algorithm is being provided with data packet transport characteristics Cᵢ of the at least first communication path Pᵢ;
- in a third step 36: the algorithm calculates a data rate Rᵢ that shall be send by the sender to the receiver via the at least first communication path Pᵢ based on the data packets transport characteristics Cᵢ of the at least first communication path Pᵢ.

In the following, the invention will be described additionally with further examples and in other words.

To overcome the efficiency loss due to standard congestions control methods in scenarios with stable and known path characteristics, the invention proposes the multipath system as foremost with a multipath transport protocol employing an in-band path measurement procedure based on congestion control, a multipath scheduler and a path-throughput-detection entity not primarily relying on the CWND. The throughput-detection entity is an embodiment of the measuring unit 17.

More precisely, the common sawtooth pattern from packet loss-based CCs with overshoots causing packet loss and resulting undershoot are avoided by the invention for paths with known bandwidth characteristics, especially the throughput capabilities. These values can be described by the data packet transport characteristics Cᵢ of the respective path Pᵢ. the typical multipath scheduler 5 [6, paras 4.1 - 4.6], which typically takes the CWND provided by CC into account can be replaced by a value derived from the throughput-detection unit. This value, i.e. the data packet transport characteristics Cᵢ value, can be an interface transmission rate (capacity) from an Ethernet interface, a GBIC or a DSL synchronization rate or a Wi-Fi MCS. However, it could also be a transformed value which gives the remaining throughput on a link, which is of a similar handling as the CWND, while for a maximum given transmission rate the scheduler has to build the remaining throughput on its own.

On such communication paths Pᵢ with known throughput characteristics, the inventive method system could employ a "dummy" CC, which gives information about packet loss and latency (RTT), while the traditional provided CWND is not considered in the multipath scheduling process, at least not as the primary indicator. This is especially the case, if it might cause problems to implement the whole inventive method in a sender. The trick is to make the sender believe it uses the known CWND to schedule the data, whereas the CWND is transformed value obtained by the calculated data rate, i.e. CWND = f(Rᵢ). As a result, the CWND would have a constant size over time.

To enable this, the multipath scheduler 5 integrates the throughput-detection entity 17 or requests the data transport characteristics Cᵢ from the throughput-detection entity 17, which provides the information about the path capacity or the available path capacity. In case the path capacity is provided, the multipath scheduler 5 calculates the available path capacity. This has the benefit, that in-band measurement further provides information about path characteristics under operation so that the data rate can be dynamically adjusted, while the try-and-error (e.g. NewReno, Cubic) or try-and-measure (BBR) principle of CC is overcome.

Assuming a bundling scenario with two static 100 Mbps links, this provides the benefit, that the 100 Mbps can be optimally used, while changes in latency or packet loss are detected. Equipped with those information, the multipath scheduler 5 can consider different traffic distribution strategies, without suffering from a non-optimal CWND and avoids throughput fluctuation. Furthermore, this would allow to implement the Lowest Round-Trip-Time First from [6, para 4.5] using the latency information provided by the "dummy" CC, while having knowledge from the throughput-detection unit 17 when a path is exhausted.

In an embodiment, the throughput-detection entity 17 will adjust its path capacity information according to cross layer information. This allows the implementation in dynamically changing path environments, without the usage of CWND to detect changes of achievable transmission throughput. For instance, in multipath setups which combine a Wi-Fi and an Ethernet link, the Wi-Fi might change the modulation and coding scheme (MCS). This decision has a direct effect to the available throughput and will be used to finally advise the multipath scheduler, by means of the throughput detection unit 17, to reduce or increase the usage of the Wi-Fi path, while the effect of latency and packet loss is further monitored by CC. In case the packet loss rate reaches a certain threshold, this has the benefit, that the Wi-Fi link can be skipped for a while until better path conditions are again present.

In a scenario where the determination of path capacity is not possible by the throughput-detection entity 17 for a communication path Pᵢ, the multipath scheduler 5 can use the CC provided CWND. That results in a mixed scenario, where some paths are controlled by the CC, while others use the dummy CC. The obvious benefit is the efficiency improvement in heterogeneous environments at least for the paths which can be assessed by the throughput-detection entity 17, while paths which cannot profit from that are not excluded from data transfer.

This might be the case in a bundling scenario with a static 100 Mbps link (e.g. DSL) and a fluctuating cellular link, in which a congestion control "CC" monitors the cellular link, while the "dummy" CC is applied to the DSL. This provides the benefit, that the 100 Mbps can be optimally used, while changes in latency or packet loss are detected. Provided with these information, the multipath scheduler 5 can apply different traffic distribution strategies, without suffering from a reduced CWND and avoiding throughput fluctuation. This allows to implement the Lowest Round-Trip-Time First from [6, para 4.5] using the real CC and "dummy" CC provided latency information, while knowing from throughput detection unit 17 the DSL path is exhausted.

The multipath scheduler 5 according to this invention can use the path information provided by the throughput-detection entity 17 but it can check additionally the CWND provided by the "dummy" CC, too. This has the benefit that a further instance can be used to verify the value given by the throughput-detection entity 17 and maybe gives an indication to skip the path for scheduling purposes or to inform the throughput-detection entity 17 about a potential inconsistency.

References, which are thereby fully included to the disclosure of the invention:
[1] A. Ford and C. Raiciu and M. Handley and O. Bonaventure, "TCP Extensions for Multipath Operation with Multiple Addresses", RFC no. 6824, January 2013;
[2] Quentin Coninck and Olivier Bonaventure, "Multipath Extensions for QUIC (MP-QUIC)", draft-deconinck-quic-multipath-05, August 2020;
[3] Markus Amend and Anna Brunstrom and Andreas Kassler and Veselin Rakocevic, "DCCP Extensions for Multipath Operation with Multiple Addresses", draft-amend-tsvwg-multipath-dccp-03, Nov 2019;
[4] P. Amer and M. Becke and T. Dreibholz and N. Ekiz and J. Iyengar and P. Natarajan and R. Stewart and M. Tuxen, "Load Sharing for the Stream Control Transmission Protocol (SCTP)", draft-tuexen-tsvwg-sctp-multipath-21, February 2021;
[5] Patent "Techniques for efficient reordering of data packets in multipath scenarios", EP3531637B1, Inventors: Markus Amend and Eckard Bogenfeld;
[6] Olivier Bonaventure and Maxime Piraux and Quentin De Coninck and Matthieu Baerts and Christoph Paasch and Markus Amend, "Multipath schedulers", draft-bonaventure-iccrg-schedulers-02, Oct 2021;

## Claims

1. A method to set a data rate for the transmission of data packets over a communication path of a communications system, wherein the method comprises the following steps:
• Providing at least a first communication path P₁ between a sender (3) and a receiver (13);
• Providing data packet transport characteristics C₁ of the at least first communication path P₁;
• Providing a data assignment unit (5), wherein a data assignment algorithm is implemented on the data assignment unit (5) that calculates a data rate R₁ that shall be send by the sender (3) to the receiver (13) via the at least a first communication path P₁ based on the data packets transport characteristics C₁ of the at least first communication path P₁.

2. The method of claim 1, wherein multiple communication paths Pᵢ, in particular at least two communication paths P₁ and P₂, are provided in a multipath scenario between the sender (3) and the receiver (13), and that the data assignment unit calculates a data rate Rᵢ for each communication path Pᵢ if it is provided with the corresponding data packet transport characteristics Cᵢ.

3. The method of claim 1, wherein data assignment unit (5) is a multipath scheduler (5) in the multipath scenario.

4. The method of any of the claims, wherein a conventional congestion window "CWND" is determined by a conventional iterative congestion control method for the setting of the data rate Rᵢ of the communication path Pᵢ
• if a temporal stability of the communication path that is determined based on the data packets transport characteristics Cᵢ is below a predefined threshold, and/or
• if no data packet transport characteristics Cᵢ is provided.

5. The method of any of the claims, wherein the calculated data rate Rᵢ is constant over time if the data packets transport characteristics Cᵢ is constant, too.

6. The method of any of the claims, wherein the data rate Rᵢ is the product of a maximal possible data rate of the communication path R_{i, max} according to the data packets transport characteristics Cᵢ multiplied by a safety factor Fᵢ, Rᵢ = R_{i, max} * Fᵢ.

7. The method of claim 6, wherein a value of the safety factor depends on the communication path Pᵢ.

8. The method of any of the claims, wherein the data packets transport characteristics Cᵢ are provided by a network provider, determined by analyzing history data and/or measured by a measuring unit.

9. The method of any of the claim 8, wherein the measurement extracts measured values from the congestion control protocol and/or a data flow rate acquisition unit measures the data packets transport characteristics Cᵢ by inspecting a communication interface Iᵢ and/or by inspecting the communication path Pᵢ.

10. The method of any of the claims, wherein the data rate Rᵢ is dynamically adjusted if the corresponding data packets transport characteristics Cᵢ changes.

11. The method of any of the claims, wherein the data rate Rᵢ is transformed into a CWND format and provided to a conventional data assignment unit and/or multipath scheduler.

12. A data assignment unit of a sender, the data assignment unit (5) comprising means to schedule data packets to a first communication path P₁ based on data packet transport characteristics C₁ of the at least first communication path P₁; a computing unit with an assignment algorithm that is configured to calculate a data rate R₁ that shall be scheduled to the at least first communication path P₁ based on the data packets transport properties C₁ of the at least first communication path P₁.

13. The data assignment unit of claim 12, wherein the data assignment unit is a multipath scheduler that comprises means to schedule data packets between multiple communication paths Pᵢ, in particular at least two communication paths P₁ and P₂, wherein the multipath scheduler calculates a data rate Rᵢ for each communication path Pᵢ if it is provided with the corresponding data packet transport characteristics Cᵢ.

14. A sender that comprises a data assignment unit of any of the claims 12 to 13.

15. A computer program comprising instructions which, when the program is executed by a computer, cause the computer to carry out the steps of the method of claim 1.

## Amended claims

### Amended claims in accordance with Rule 137(2) EPC.

1. A method to set a data rate for the transmission of data packets over a communication path of a communications system, wherein the method comprises the following steps:
• Providing at least a first communication path P₁ between a sender (3) and a receiver (13);
• Providing data packet transport characteristics C₁ of the at least first communication path P₁;
• Providing a data assignment unit (5), wherein a data assignment algorithm is implemented on the data assignment unit (5) that calculates a data rate R₁ that shall be send by the sender (3) to the receiver (13) via the at least a first communication path P₁ based on the data packets transport characteristics C₁ of the at least first communication path P₁,
**characterized in that**
the calculated data rate Rᵢ is constant over time if the data packets
• transport characteristics Cᵢ is constant, too.

2. The method of claim 1, wherein multiple communication paths Pᵢ, in particular at least two communication paths P₁ and P₂, are provided in a multipath scenario between the sender (3) and the receiver (13), and that the data assignment unit calculates a data rate Rᵢ for each communication path Pᵢ if it is provided with the corresponding data packet transport characteristics Cᵢ.

3. The method of claim 1, wherein data assignment unit (5) is a multipath scheduler (5) in the multipath scenario.

4. The method of any of the claims, wherein a conventional congestion window "CWND" is determined by a conventional iterative congestion control method for the setting of the data rate Rᵢ of the communication path Pᵢ
• if a temporal stability of the communication path that is determined based on the data packets transport characteristics Cᵢ is below a predefined threshold,
and/or
• if no data packet transport characteristics Cᵢ is provided.

5. The method of any of the claims, wherein the data rate Rᵢ is the product of a maximal possible data rate of the communication path R_{i, max} according to the data packets transport characteristics Cᵢ multiplied by a safety factor Fᵢ, Rᵢ = R_{i, max} * Fᵢ.

6. The method of claim 5, wherein a value of the safety factor depends on the communication path Pᵢ.

7. The method of any of the claims, wherein the data packets transport characteristics Cᵢ are provided by a network provider, determined by analyzing history data and/or measured by a measuring unit.

8. The method of any of the claim 7, wherein the measurement extracts measured values from the congestion control protocol and/or a data flow rate acquisition unit measures the data packets transport characteristics Cᵢ by inspecting a communication interface Iᵢ and/or by inspecting the communication path Pᵢ.

9. The method of any of the claims, wherein the data rate Rᵢ is dynamically adjusted if the corresponding data packets transport characteristics Cᵢ changes.

10. The method of any of the claims, wherein the data rate Rᵢ is transformed into a CWND format and provided to a conventional data assignment unit and/or multipath scheduler.

11. A data assignment unit of a sender, the data assignment unit (5) comprising means to schedule data packets to a first communication path P₁ based on data packet transport characteristics C₁ of the at least first communication path P₁; a computing unit with an assignment algorithm that is configured to calculate a data rate R₁ that shall be scheduled to the at least first communication path P₁ based on the data packets transport properties C₁ of the at least first communication path P₁, **characterized in that**
the calculated data rate Rᵢ is constant over time if the data packets transport characteristics Cᵢ is constant, too.

12. The data assignment unit of claim 11, wherein the data assignment unit is a multipath scheduler that comprises means to schedule data packets between multiple communication paths Pᵢ, in particular at least two communication paths P₁ and P₂, wherein the multipath scheduler calculates a data rate Rᵢ for each communication path Pᵢ if it is provided with the corresponding data packet transport characteristics Cᵢ.

13. A sender that comprises a data assignment unit of any of the claims 11 to 12.

14. A computer program comprising instructions which, when the program is executed by a computer, cause the computer to carry out the steps of the method of claim 1.
